# EUROPEAN PATENT APPLICATION

(11) **EP 4 583 277 A1**
(43) Date of publication of application: **09.07.2025**
(21) Application number: 23922212.8
(22) Date of filing: 05.06.2023
(51) Int. Cl.: H01M 50/24

(54) **BATTERY AND ELECTRIC DEVICE**

(30) Priority: 14.02.2023 CN 202320203130 U
(71) Applicant: Contemporary Amperex Technology (Hong Kong) Limited, Central (HK)
(72) Inventor: FANG, Zhengyu, Ningde, Fujian 352100 (CN); QIN, Feng, Ningde, Fujian 352100 (CN); JI, Hongye, Ningde, Fujian 352100 (CN)
(74) Representative: Gong, Jinping
(86) International application number: PCT/CN2023/098435
(87) International publication number: WO 2024/169085

(57) **Abstract**

The present application relates to a battery and an electric device. The present application relates to a battery and an electric device. The battery comprises a case, a battery assembly and a protective assembly, wherein the battery assembly is arranged inside the case and comprises a plurality of battery cells; a gap is formed between two adjacent battery cells and extends in the height direction of the battery cell, and the gap comprises two openings opposite each other in the height direction; and the protective assembly is connected to two adjacent battery cells and covers at least one of the openings of the corresponding gap. The protective assembly of the present application can have a certain blocking effect on external foreign matter, and alleviates the problem of uneven stress on the battery cells due to foreign matter, so as to reduce the possibility of lithium plating in the battery cells, and thus improve the cycle performance of the battery cells, thereby prolonging the service life of the battery.

## Description

### CROSS-REFERENCE TO RELATED APPLICATION

The present application claims priority to Chinese Patent Application No. 202320203130.X, filed on February 14, 2023 and entitled "BATTERY AND ELECTRIC DEVICE", the content of which is incorporated herein by reference in its entirety.

### TECHNICAL FIELD

The present application relates to the technical field of batteries, and in particular, to a battery and an electric device.

### BACKGROUND

Battery cells are widely used in electronic devices, such as mobile phones, laptop computers, electric bicycles, electric vehicles, electric airplanes, electric ships, electric toy cars, electric toy ships, electric toy airplanes, and electric tools. Battery cells may include nickel-cadmium battery cells, nickel-hydrogen battery cells, lithium-ion battery cells, secondary alkaline zinc-manganese battery cells, etc.

In the development of battery technology, the cycle performance of the battery cells directly affects the service life of the battery. Therefore, how to improve the cycle performance of the battery cell to prolong the service life of the battery is one of the technical problems that need to be urgently solved at present.

### SUMMARY

The present application provides a battery and an electric device and is intended to improve the cycle performance of battery cells and thereby prolong the service life of the battery.

In a first aspect, the present application provides a battery. The battery includes a case, a battery assembly, and a protective assembly. The battery assembly is provided inside the case, and the battery assembly includes a plurality of battery cells; a gap is present between two adjacent battery cells, and the gap extends along a height direction of the battery cells and includes two openings opposite to each other along the height direction; the protective assembly is connected to two adjacent battery cells and covers at least one opening of the gap.

As such, the battery according to the embodiments of the present application includes the protective assembly, and the protective assembly is connected to two adjacent battery cells and covers at least one opening of the gap, such that the protective assembly can block external foreign matters to some extent, and the problem of uneven stress on the battery cells caused by foreign matters is relieved, and thus the possibility of lithium plating on the battery cells is reduced, the cycle performance of the battery cells is improved, and thereby the service life of the battery can be prolonged.

In some embodiments, the case includes a first case part having an accommodating cavity and a second case part lidded onto the first case part, the first case part and the second case part are sequentially provided along the height direction, and the accommodating cavity is provided inside with a battery assembly; the protective assembly covers the opening of the gap away from the second case part.

As such, when the battery assembly and the first case part according to the embodiments of the present application are bonded by the structural adhesive, the protective assembly can block the structural adhesive. This reduces the possibility of the structural adhesive entering the gap, such that the problem of uneven stress on the battery cells caused by foreign matters is relieved. Besides, when the first case part is connected in an upwardly-opening manner to the battery assembly, the risk that welding slags and other foreign matters in the first case part fall into the gap can be effectively reduced.

In some embodiments, the protective assembly covers the two openings.

As such, the protective assembly according to the embodiments of the present application has a stronger protection effect, which enhances the blocking against foreign matters, further relieves the problem of uneven stress on the battery cells caused by foreign matters, and thereby reduces the possibility of lithium plating on the battery cells.

In some embodiments, the battery assembly includes a plurality of battery modules sequentially provided along a first direction, and each battery module includes a plurality of battery cells sequentially provided along a second direction; the gap includes a first gap, the first gap is located between two adjacent battery modules, and the first gap includes two first openings opposite to each other along the height direction, where every two of the second direction, the first direction, and the height direction are perpendicular to each other; the protective assembly includes first protective parts, and each of the first protective parts connects two adjacent battery modules and covers at least one first opening of the first gap.

As such, the first protective part according to the embodiments of the present application can prevent foreign matters from entering the first gap, thus reducing the influence of foreign matters on the battery modules and relieving the problem of uneven stress on the battery modules caused by foreign matters.

In some embodiments, the gap further includes a second gap. The second gap is located between two adjacent battery cells of the battery module, and the second gap includes two second openings opposite to each other along the height direction; the protective assembly further includes second protective parts, and each of the second protective parts connects two adjacent battery cells of the battery module and covers at least one second opening of the second gap.

As such, the second protective part according to the embodiments of the present application can prevent foreign matters from entering the second gap, thus further reducing the influence of foreign matters on the battery modules and thereby further relieving the problem of uneven stress on the battery modules caused by foreign matters.

In some embodiments, the second protective part extends along the first direction and covers the second gaps of a plurality of battery modules.

As such, the second protective part according to the embodiments of the present application has a larger structure size. This is favorable to reducing the difficulty in installing the second protective part and enhancing the blocking effect on foreign matters.

In some embodiments, the battery cell includes a bottom surface on one side along the height direction, and the first protective part is provided on the one side of the battery cell along the height direction and is connected to at least a part of the bottom surface.

As such, the first protective part according to the embodiments of the present application can separate the first gap from external foreign matters, thus enhancing the blocking effect on foreign matters, relieving the problem of uneven stress on the battery cells caused by foreign matters, and thereby reducing the possibility of lithium plating on the battery cells.

In some embodiments, at least a part of the first protective part is located within the first gap.

As such, the first gap can be filled with the first protective part according to the embodiments of the present application, such that the blocking effect on foreign matters is enhanced, the problem of uneven stress on the battery cells is relieved, the connection strength and the connection stability between the protective assembly and the battery cells can be enhanced, and thus the structural stability of the battery is improved.

In some embodiments, the battery cell includes a bottom surface on one side along the height direction, and along the height direction, a surface of the first protective part is flush with the bottom surface.

As such, the first protective part according to the embodiments of the present application not only can effectively block foreign matters, but also is beneficial to improving the surface flatness between adjacent battery modules.

In some embodiments, the battery cell includes a bottom surface on one side along the height direction; the first protective part includes a first part and a second part, the first part is located in the first gap and connects two adjacent battery modules, and the second part is located on the one side of the battery cell along the height direction and is connected to at least a part of the bottom surface.

As such, the first protective part according to the embodiments of the present application has a multiple protection structure, such that the protection effect of the first protective part is further enhanced, the blocking effect on foreign matters is enhanced, and thereby the problem of uneven stress on the battery cells caused by foreign matters is further relieved.

In some embodiments, the battery cell includes two first surfaces opposite to each other along the first direction and two second surfaces opposite to each other along the second direction; each of the second surfaces is located between the two first surfaces and has an area smaller than that of each of the first surfaces, and the first surfaces of two adjacent battery modules are provided opposite to each other.

As such, the first protective part according to the embodiments of the present application can prevent foreign matters from entering the first surfaces of the battery cells, thereby reducing the influence of foreign matters on the first surfaces as much as possible and relieving the problem of uneven stress on the battery cells.

In a second aspect, the present application provides an electric device. The electric device includes the battery according to any one of the embodiments of the first aspect of the present application, and the battery is used for providing electric energy.

### BRIEF DESCRIPTION OF THE DRAWINGS

Features, advantages, and technical effects of exemplary embodiments of the present application will be described below with reference to the drawings.
FIG. 1 is a schematic structural diagram of a vehicle provided according to some embodiments of the present application;
FIG. 2 is a schematic exploded view of a battery provided according to some embodiments of the present application;
FIG. 3 is a schematic structural diagram of a battery module group provided according to some embodiments of the present application;
FIG. 4 is a schematic exploded view of a battery cell provided according to some embodiments of the present application;
FIG. 5 is a schematic partial structure diagram of a battery provided according to some embodiments of the present application;
FIG. 6 is a schematic cross-sectional view of a battery provided according to some embodiments of the present application;
FIG. 7 is a partially enlarged view of the portion A in FIG. 6;
FIG. 8 is a schematic cross-sectional view of a battery provided according to some other embodiments of the present application;
FIG. 9 is a partially enlarged view of the portion B in FIG. 8;
FIG. 10 is a schematic cross-sectional view of a battery provided according to still some other embodiments of the present application;
FIG. 11 is a partially enlarged view of the portion C in FIG. 10;
FIG. 12 is another schematic cross-sectional view of a battery provided according to some embodiments of the present application;
FIG. 13 is a partially enlarged view of the portion D in FIG. 12.

The drawings are not necessarily drawn to scale.

Reference numerals in the drawings have the following meanings:
1. Battery cell; 11. First surface; 12. Second surface; 13. Bottom surface; 10. Electrode assembly; 20. Housing assembly; 21. Housing; 210. Accommodating part; 22. End cover assembly; 221. End cover; 222. Electrode terminal; 2. Battery module group; 3. Battery; 3a. Case; 31. First case part; 32. Second case part; 33. Case space; 3b. Battery assembly; 34. Battery module; 341. First gap; 341a. First opening; 342. Second gap; 342a. Second opening; 35. Protective assembly; 351. First protective part; 351a. First part; 351b. Second part; 352. Second protective part; 4. Vehicle; 41. Controller; 42. Motor; X. First direction; Y. Second direction; Z. Height direction.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those of ordinary skill in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "connect", "connection", and "attachment" shall be construed broadly and may be, for example, fixed connection, detachable connection, or integrated connection, or direct connection, indirect connection via an intermediate, or internal communication between two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" herein generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality of" used in the present application refers to no less than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, etc. This is not limited in the embodiments of the present application. The battery cell referred to in the present application is a square battery cell, which may be flat, rectangular parallelepiped, or in other shapes. This is also not limited in the embodiments of the present application.

The battery mentioned in the embodiments of the present application refers to a single physical module including one or more battery cells to provide higher voltage and capacity. For example, the battery mentioned in the present application may include a battery module, a battery pack, or the like. A battery generally includes a case used for encapsulating one or more battery cells. The case can prevent liquid or other foreign matters from affecting the charging or discharging of the battery cells.

A battery cell includes an electrode assembly and an electrolyte, and the electrode assembly includes a positive electrode plate, a negative electrode plate, and a separator. A battery cell primarily works by the movement of metal ions between the positive electrode plate and the negative electrode plate. The positive electrode plate includes a positive electrode current collector and a positive electrode active substance layer, and the positive electrode active substance layer is applied on the surface of the positive electrode current collector. The positive electrode current collector includes a positive electrode current collecting part and a positive electrode protrusion part protruding out of the positive electrode current collecting part; the positive electrode current collecting part is coated with the positive electrode active substance layer, at least a part of the positive electrode protrusion part is not coated with the positive electrode active substance layer, and the positive electrode protrusion part serves as the positive electrode tab. Taking lithium-ion batteries as an example, the material of the positive electrode current collector may be aluminum, the positive electrode active substance layer includes a positive electrode active substance, and the positive electrode active substance may be lithium cobaltate, lithium iron phosphate, ternary lithium, lithium manganate, or the like. The negative electrode plate includes a negative electrode current collector and a negative electrode active substance layer, and the negative electrode active substance layer is applied on the surface of the negative electrode current collector. The negative electrode current collector includes a negative electrode current collecting part and a negative electrode protrusion part protruding out of the negative electrode current collecting part; the negative electrode current collecting part is coated with the negative electrode active substance layer, at least a part of the negative electrode protrusion part is not coated with the negative electrode active substance layer, and the negative electrode protrusion part serves as the negative electrode tab. The material of the negative electrode current collector may be copper, the negative electrode active substance layer includes a negative electrode active substance, and the negative electrode active substance may be carbon, silicon, or the like. To ensure the passing of a large current without fusing, there are a plurality of positive electrode tabs that are stacked together, and there are a plurality of negative electrode tabs that are stacked together. The material of the separator may be polypropylene (PP), polyethylene (PE), or the like. In addition, the electrode assembly may be a winding structure or a stacking structure, but the embodiments of the present application are not limited thereto.

A battery cell may further include a housing assembly including a housing having an accommodating cavity therein, and the accommodating cavity is a confined space provided by the housing for the electrode assembly and the electrolyte.

In the related art, when a plurality of battery cells are assembled to a case, a functional member is generally disposed between adjacent battery cells, and conventional functional members include, e.g., a buffer pad, a heat insulation pad, or a cooling plate. Due to design factors or process errors, the functional member usually can not effectively fit the surface of the battery cell, and there is often a gap or step between the two, and this gap or step often leaves a hiding space for foreign matters. For example, when the battery cells are fixed to the case by using the structural adhesive, the structural adhesive not totally solidified can extremely easily be pressed to enter the gap between the battery cells, and the structural adhesive will remain on the surface of the battery cells when become solidified. This can easily cause uneven stress on the surface of battery cells and lead to stress concentration and thereby easily lead to local lithium plating on battery cells, thus reducing the cycle performance of the battery and leading to the shortening of the service life of the battery.

In view of the above problems, a battery is provided in the embodiments of the present application. The battery includes a case, a battery assembly, and a protective assembly. The battery assembly is provided inside the case, and the battery assembly includes a plurality of battery cells; a gap is present between two adjacent battery cells, and the gap extends along a height direction of the battery cells and includes two openings opposite to each other along the height direction; the protective assembly is connected to two adjacent battery cells and covers at least one opening of the gap. As such, the protective assembly can block external foreign matters to some extent, and the problem of uneven stress on the battery cells caused by foreign matters is relieved, and thus the possibility of local lithium plating on the battery cells is reduced, the cycle performance of the battery cells is improved, and thereby the service life of the battery can be prolonged.

The technical solutions described in the embodiments of the present application are suitable for batteries containing battery cells and electric devices using batteries.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric apparatuses described above are not specially limited in the embodiments of the present application.

For ease of explanation, the following embodiments will be described by taking a vehicle as an example of the electric device.

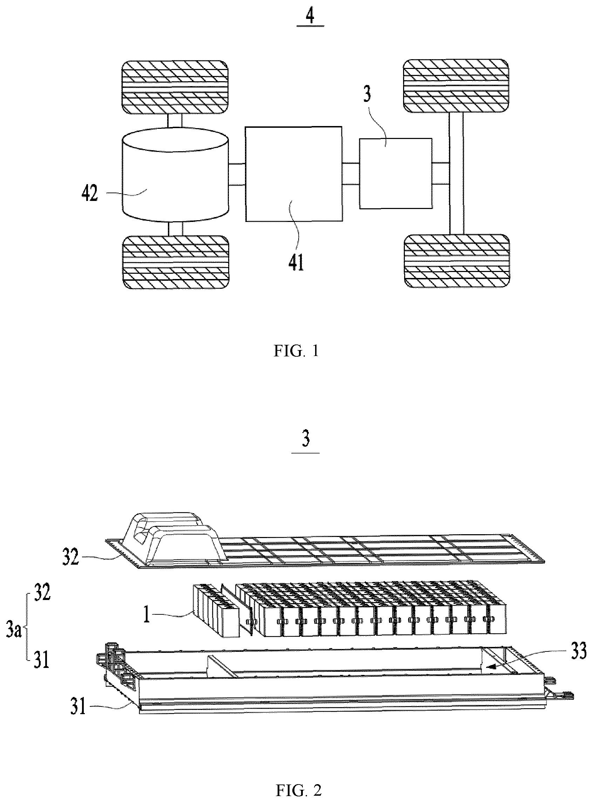

FIG. 1 is a schematic structural diagram of a vehicle provided according to some embodiments of the present application.

As shown in FIG. 1, a battery 3 is provided inside a vehicle 4, and the battery 3 may be provided at the bottom, the head, or the tail of the vehicle 4. The battery 3 may be used for powering the vehicle 4. For example, the battery 3 may serve as an operational power source of the vehicle 4.

The vehicle 4 may also include a controller 41 and a motor 42. The controller 41 is used for controlling the battery 3 to power the motor 42, e.g., for operation power needed by the vehicle 4 for start-up, navigation, and driving.

In some embodiments of the present application, the battery 3 may not only serve as the operational power source for the vehicle 4, but also as a driving power source for the vehicle 4 to, instead of or in part instead of fuel or natural gas, provide driving power for the vehicle 4.

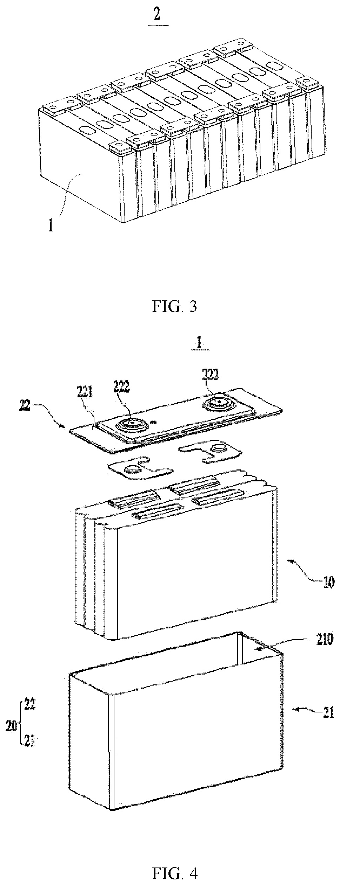

FIG. 2 is a schematic exploded view of a battery provided according to some embodiments of the present application; FIG. 3 is a schematic structural diagram of a battery module group provided according to some embodiments of the present application.

As shown in FIG. 2 and FIG. 3, the battery 3 may include a case 3a for accommodating the battery cells 1, and the case 3a may be of various structures. In some embodiments, the case 3a may include a first case part 31 and a second case part 32. The first case part 31 and the second case part 32 are mutually lidded onto each other, and the first case part 31 and the second case part 32 jointly define a case space 33 for accommodating the battery cells. The first case part 31 may be a hollow structure with one end open, the second case part 32 is a plate-like structure, and the second case part 32 is lidded onto the open side of the first case part 31 to form the case 3a having the case space 33; the first case part 31 and the second case part 32 may each be a hollow structure with one side open, and the open side of the second case part 32 may be lidded onto the open side of the first case part 31 to form the case 3a having the case space 33. Of course, the first case part 31 and the second case part 32 may be of various shapes, such as cylindrical rectangular parallelepiped.

To improve the sealing property after the first case part 31 and the second case part 32 are connected, a seal, such as a sealant or a gasket, may be further provided between the first case part 31 and the second case part 32.

If the second case part 32 is lidded onto the top of the first case part 31, the second case part 32 may also be referred to as an upper case cover, and the first case part 31 may also be referred to as a lower case.

In the battery 3, there may be a plurality of battery cells 1, and the plurality of battery cells 1 may be connected in series, in parallel, or in series-parallel. The series-parallel connection means that both series connection and parallel connection are present for the connection among the plurality of battery cells 1. The plurality of battery cells 1 may be directly connected in series, in parallel, or in series-parallel, and the whole formed by the plurality of battery cells 1 is then accommodated in the case 3a. The plurality of battery cells 1 may also be first connected in series, in parallel, or in series-parallel to form the battery module group 2; there may be one or more battery module groups 2, and the one or more battery module groups 2 are accommodated in the case 3a. In the case of a plurality of battery module groups 2, the plurality of battery module groups 2 may be connected in series, in parallel, or in series-parallel to form a whole to be accommodated in the case 3a.

Illustratively, in FIG. 2, the whole formed by a plurality of battery cells 1 is accommodated in the case 3a.

FIG. 4 is a schematic exploded view of a battery cell provided according to some embodiments of the present application.

As shown in FIG. 4, the battery cell 1 provided according to an embodiment of the present application includes an electrode assembly 10 and a housing assembly 20, and the electrode assembly 10 is accommodated in the housing assembly 20.

In some embodiments, the housing assembly 20 may also be used for accommodating an electrolyte, such as an electrolytic solution. The housing assembly 20 may be of various structures.

In some embodiments, the housing assembly 20 may include a housing 21 and an end cover assembly 22. The housing 21 has a hollow structure with one side open, and the end cover assembly 22 is lidded onto the opening of the housing 21 and forms a sealing connection, thus forming an accommodating part 210 for accommodating the electrode assembly 10 and the electrolyte.

The housing 21 may be of various structures, such as a rectangular parallelepiped structure or other polyhedron structures. The shape of the housing 21 may be determined according to the specific shape of the electrode assembly 10. For example, if the electrode assembly 10 has a rectangular parallelepiped structure, a rectangular parallelepiped housing may be used.

In some embodiments, the end cover assembly 22 includes an end cover 221, and the end cover 221 is lidded onto the opening of the housing 21. The end cover 221 may be of various structures. For example, the end cover 221 may have a plate-like structure or a hollow structure with one end open. Illustratively, in FIG. 4, the housing 21 has a rectangular parallelepiped structure, the end cover 221 is of a plate-like structure, and the end cover 221 is lidded onto the opening at the top of the housing 21.

The end cover 221 may be made of an insulating material (e.g., plastic) or a conductive material (e.g., metal). When the end cover 221 is made of a metal material, the end cover assembly 22 may further include an insulating member at a side of the end cover 221 facing the electrode assembly 10 to insulate and separate the end cover 221 from the electrode assembly 10.

In some embodiments, the end cover assembly 22 may further include an electrode terminal 222, and the electrode terminal 222 is mounted on the end cover 221. There are two electrode terminals 222. The two electrode terminals 222 are defined as a positive electrode terminal and a negative electrode terminal, respectively, and the positive electrode terminal and the negative electrode terminal are both used to be electrically connected to the electrode assembly 10 to output electric energy generated by the electrode assembly 10.

In some other embodiments, the housing assembly 20 may be of other structures. For example, the housing assembly 20 includes a housing 21 and two end cover assemblies 22; the housing 21 has a hollow structure with two opposite sides open, and one end cover assembly 22 is correspondingly lidded onto one opening of the housing 21 and forms a sealing connection, thus forming an accommodating part 210 for accommodating the electrode assembly 10 and the electrolyte. In such a structure, two electrode terminals 222 may be provided on one end cover assembly 22 while no electrode terminal 222 was provided on the other end cover assembly 22, or one electrode terminal 222 may be provided on each of the two end cover assemblies 22.

In the battery cell 1, there may be one or more electrode assemblies 10 accommodated in the housing assembly 20. Illustratively, in FIG. 4, there are four electrode assemblies 10.

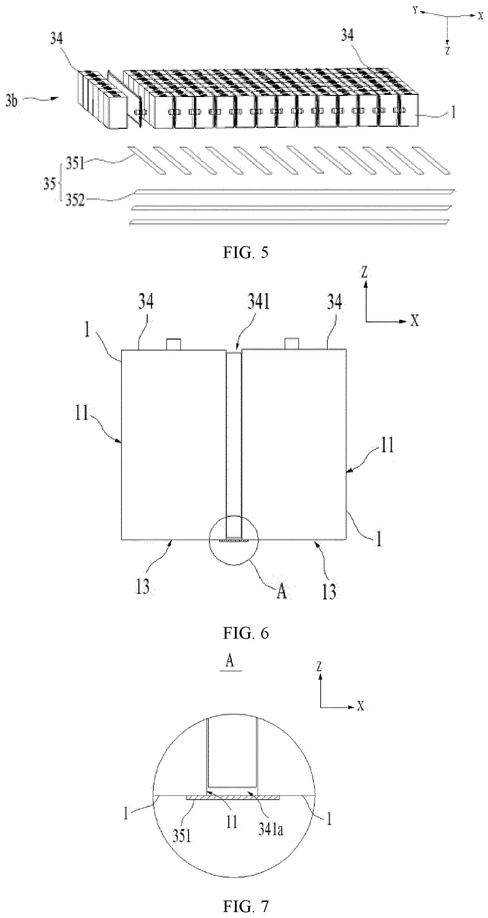

FIG. 5 is a schematic partial structure diagram of a battery provided according to some embodiments of the present application.

As shown in FIG. 5, the battery includes a case, a battery assembly 3b, and a protective assembly 35. The battery assembly 3b is provided inside the case, and the battery assembly 3b includes a plurality of battery cells 1; a gap is present between two adjacent battery cells 1, and the gap extends along the height direction Z of the battery cells 1 and includes two openings opposite to each other along the height direction Z; the protective assembly 35 is connected to two adjacent battery cells 1 and covers at least one opening of the gap.

The battery assembly 3b is provided in the case, and the battery assembly 3b may be connected to the case in various ways. For example, the battery assembly 3b and the case may be bonded by using the structural adhesive, or the threaded connection is adopted. The battery assembly 3b includes a plurality of battery cells 1, and a gap is present between two adjacent battery cells 1. A buffer pad, a heat insulation pad, a cooling plate, or the like may be provided in the gap. Illustratively, in FIG. 5, a cooling plate may be provided between two adjacent battery cells 1 along the first direction X. It should be noted that the first direction X may be considered to be perpendicular to the height direction Z, and the first direction X may be the length direction of the battery cells 1 or the width direction of the battery cells 1. Of course, a buffer pad, a heat insulation pad, a cooling plate, or the like may not be provided between two adjacent battery cells 1. During the charging and discharging of the battery cells 1, the battery cells 1 may expand and contract, such that a gap may be present between two adjacent battery cells 1.

The protective assembly 35 is connected to two adjacent battery cells 1, and the protective assembly 35 and the battery cells 1 may be directly connected or indirectly connected. The protective assembly 35 and the battery cell 1 may be connected in various ways. For example, bonding may be adopted, since the bonding features high reliability and a simple operation procedure. The protective assembly 35 may be connected to multiple positions of the battery cell 1. For example, the protective assembly 35 may be connected to the surface of the battery cell 1 parallel to the height direction Z, and the protective assembly 35 may also be connected to the surface of the battery cell 1 perpendicular to the height direction Z. This is not limited in the present application.

The protective assembly 35 covers at least one opening of the gap, that is, the protective assembly 35 may cover the opening on one side of the gap and may also cover openings on two sides of the gap. The covering of the opening by the protective assembly 35 may include various situations. For example, the protective assembly 35 may be provided outside the gap or provided inside the gap, or the protective assembly 35 is partially provided outside the gap and partially provided inside the gap. This is not limited in the present application.

The battery according to the embodiments of the present application includes the protective assembly 35, and the protective assembly 35 is connected to two adjacent battery cells 1 and covers at least one opening of the gap, such that the protective assembly 35 can block external foreign matters to some extent, and the problem of uneven stress on the battery cells 1 caused by foreign matters is relieved, and thus the possibility of local lithium plating on the battery cells 1 is reduced, the cycle performance of the battery cells 1 is improved, and thereby the service life of the battery can be prolonged.

Further, the case includes a first case part having an accommodating cavity and a second case part lidded onto the first case part, the first case part and the second case part are sequentially provided along the height direction Z, and the accommodating cavity is provided inside with a battery assembly 3b; the protective assembly 35 covers the opening of the gap away from the second case part.

In the present application, the first case part may be understood as a lower case, and the second case part may be understood as an upper case cover. The first case part is the main body structure of the case, and the battery assembly 3b is provided in the accommodating cavity of the first case part and connected to the first case part.

The covering of the opening of the gap away from the second case part by the protective assembly 35 may be understood as the protective assembly 35 covering the lower opening of the gap. When the battery assembly 3b is connected to the first case part by bonding, the protective assembly 35 can block the structural adhesive. This reduces the possibility of the structural adhesive entering the gap, such that the problem of uneven stress on the battery cells 1 caused by foreign matters is relieved, and thereby the possibility of lithium plating on the battery cells 1 is reduced. In addition, when the first case part is installed in an upwardly-opening manner with the battery assembly 3b, the risk that the foreign matters such as welding slags or metal particles in the first case part fall into the gap can be effectively reduced.

In some embodiments, the protective assembly 35 covers two openings of the gap. As such, the protective assembly 35 not only can block the structural adhesive, but also can reduce the possibility that other foreign matters get into the gap when the battery is assembled. For example, the protective assembly 35 can block the falling of metal chips or welding slags.

According to the embodiments of the present application, the arrangement of allowing the protective assembly 35 to cover the two openings of the gap enables the protective assembly 35 to have a stronger protection effect, enhances the blocking effect of the protective assembly 35 on foreign matters, further relieves the problem of uneven stress on the battery cells 1 caused by foreign matters, and thereby reduces the possibility of lithium plating on the battery cells 1.

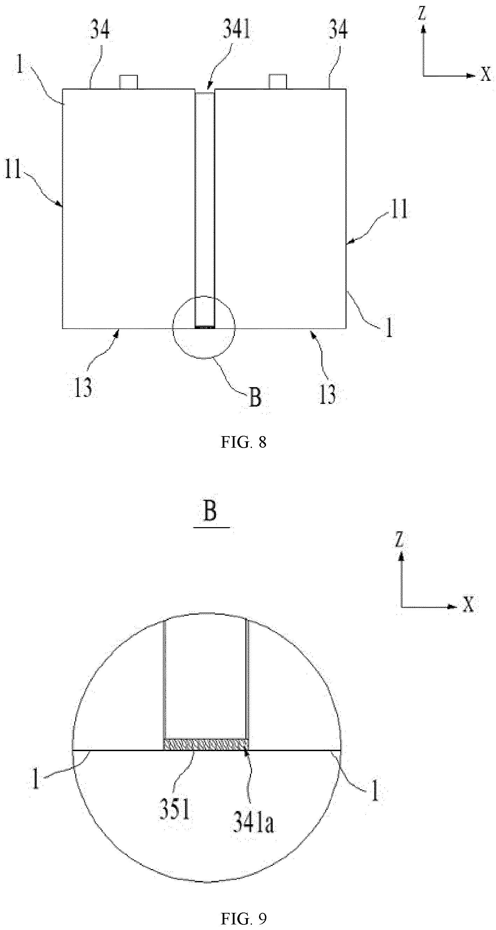

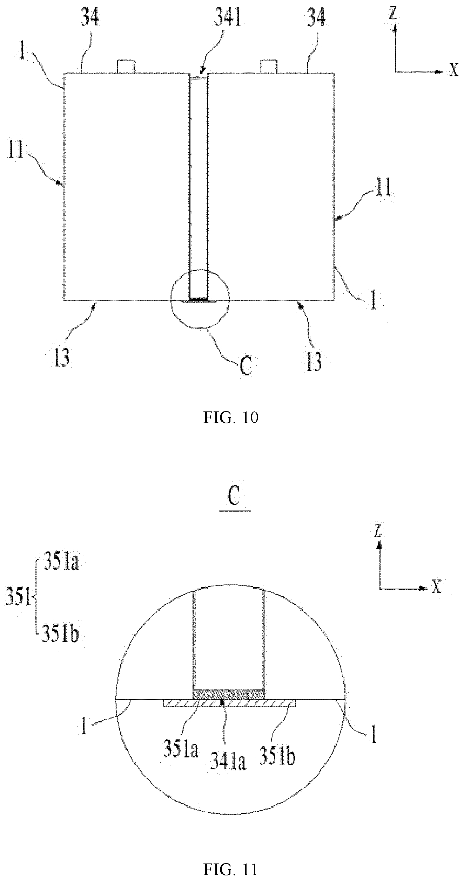

FIG. 6 is a schematic cross-sectional view of a battery provided according to some embodiments of the present application; FIG. 7 is a partially enlarged view of the portion A in FIG. 6; FIG. 8 is a schematic cross-sectional view of a battery provided according to some other embodiments of the present application; FIG. 9 is a partially enlarged view of the portion B in FIG. 8; FIG. 10 is a schematic cross-sectional view of a battery provided according to still some other embodiments of the present application; FIG. 11 is a partially enlarged view of the portion C in FIG. 10.

As shown in FIG. 5 to FIG. 11, in some embodiments, the battery assembly 3b includes a plurality of battery modules 34 sequentially provided along the first direction X, and each battery module 34 includes a plurality of battery cells 1 sequentially provided along the second direction Y. The gap includes a first gap 341, the first gap 341 is located between two adjacent battery modules 34, and the first gap 341 includes two first openings 341a opposite to each other along the height direction Z. The protective assembly 35 includes first protective parts 351, and each of the first protective parts 351 connects two adjacent battery modules 34 and covers at least one first opening 341a of the first gap 341. Every two of the second direction Y, the first direction X, and the height direction Z are perpendicular to each other. It can be understood that, in the embodiments of the present application, the first direction X may be considered as the width direction of the battery cell 1, and the second direction Y may be considered as the length direction of the battery cell 1.

The battery assembly 3b includes a plurality of battery modules 34 sequentially provided along the first direction X, and a cooling plate, a buffer pad, or the like may be provided between adjacent battery modules 34. Illustratively, in FIG. 5, a cooling plate may be provided between two adjacent battery modules 34.

The first protective part 351 connects two adjacent battery modules 34, and the first protective part 351 and the battery module 34 may be connected in various ways.

In some examples, as shown in FIG. 6 and FIG. 7, the battery cell 1 includes a bottom surface 13 on one side along the height direction Z, and the first protective part 351 is provided on the one side of the battery cell 1 along the height direction Z and is connected to at least a part of the bottom surface 13.

The first protective part 351 being connected to at least a part of the bottom surface 13 means that the first protective part 351 may be connected to a part of the bottom surface 13 or the first protective part 351 may be connected to the entire bottom surface 13. The first protective part 351 and the bottom surface 13 may be connected in various ways and may be directly connected or indirectly connected. The first protective part 351 and the bottom surface 13 may be bonded, since the bonding features high reliability, a simple connection procedure, and easy operation. The first protective part 351 may be of various structures. For example, it may be an adhesive piece, an adhesive tape, an adhesive strip, or the like.

In the embodiments of the present application, the arrangement of allowing the first protective part 351 to be at the one side of the battery cell 1 along the height direction Z enables the first protective part 351 to separate the first gap 341 from external foreign matters, thus enhancing the blocking effect on foreign matters, relieving the problem of uneven stress on the battery cells 1 caused by foreign matters, and thereby reducing the possibility of lithium plating on the battery cells 1.

In other examples, as shown in FIG. 8 and FIG. 9, at least a part of the first protective part 351 is located within the first gap 341.

At least a part of the first protective part 351 being located within the first gap 341 means that the first gap 341 may be filled with the first protective part 351. The first protective part 351 may be of various structures. For example, the first protective part 351 may include the blocking glue; the blocking glue is evenly filled in the first gap 341, and after the blocking glue solidifies, the solid-state blocking glue can block the external foreign matters. The evenly filled blocking glue can effectively block external foreign matters from getting into the first gap 341 under the prerequisite of sufficiently reducing the influence on battery cells 1, thereby relieving the problem of uneven stress on battery cells 1. Besides, the first protective part 351 is provided in the first gap 341, which may also enhance the connection strength and connection stability between the first protective part 351 and the battery cell 1 to some extent, thereby improving the structural stability of the battery.

As some specific examples, the battery cell 1 includes a bottom surface 13 on one side thereof along the height direction Z, and along the height direction Z, the surface of the first protective part 351 is flush with the bottom surface 13. In these examples, the surface of the first protective part 351 being flush with the bottom surface 13 can improve the uniformity of the height of the first protective part 351 and the bottom surface 13 and is beneficial to improving the surface flatness between battery modules 34. Of course, in some other specific examples, the surface of the first protective part 351 may also be convex relative to the bottom surface 13 or concave relative to the bottom surface 13. This is not limited in the present application.

As some other specific examples, as shown in FIG. 10 and FIG. 11, the battery cell 1 includes a bottom surface 13 on one side along the height direction Z; the first protective part 351 includes a first part 351a and a second part 351b, the first part 351a is located in the first gap 341 and connects two adjacent battery modules 34, and the second part 351b is located on the one side of the battery cell 1 along the height direction Z and is connected to at least a part of the bottom surface 13.

The first part 351a is located in the first gap 341, and the first part 351a may be a blocking glue. The second part 351b is located on the one side of the battery cell 1 along the height direction Z and connected to at least a part of the bottom surface 13, and the second part 351b may be an adhesive tape or piece, or the like.

In these examples, the first protective part 351 provides a dual protection structure, such that the protection effect of the first protective part 351 is further enhanced, the blocking effect on foreign matters is enhanced, and thereby the problem of uneven stress on the battery cells 1 caused by foreign matters is further relieved.

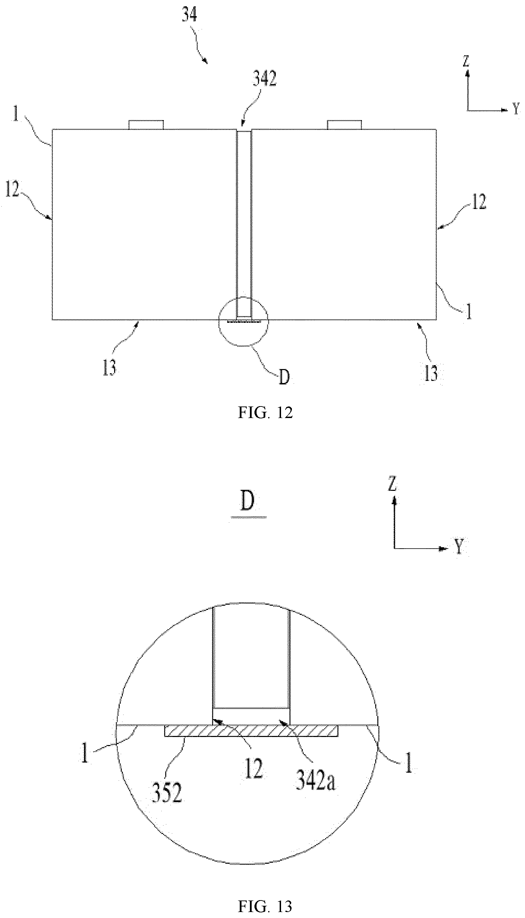

FIG. 12 is another schematic cross-sectional view of a battery provided according to some embodiments of the present application; FIG. 13 is a partially enlarged view of the portion D in FIG. 12.

As shown in FIG. 5 to FIG. 13, the gap further includes a second gap 342. The second gap 342 is located between two adjacent battery cells 1 of the battery module 34, and the second gap 342 includes two second openings 342a opposite to each other along the height direction Z; the protective assembly 35 further includes second protective parts 352, and each of the second protective parts 352 connects two adjacent battery cells 1 of the battery module and covers at least one second opening 342a of the second gap 342.

A buffer pad, a heat insulation pad, a cooling plate, or the like may be provided in the second gap 342. Illustratively, in the embodiments of the present application, a buffer pad or a heat insulation pad may be provided in the second gap 342. The second gap 342 includes two second openings 342a opposite to each other along the height direction Z, and the two second openings 342a are respectively located at two ends of the second gap 342 along the height direction Z.

The second protective part 352 covers at least one second opening 342a of the second gap 342, that is, the second protective part 352 may cover the second opening 342a on one side of the second gap 342 and may also cover the second openings 342a on two sides of the second gap 342. In the case that the second protective part 352 covers the second opening 342a, the second protective part 352 may be located outside the second gap 342 or may be located inside the second gap 342, or the second protective part 352 is partially located outside the second gap 342 and partially located inside the second gap 342. This is not limited in the present application.

According to the embodiments of the present application, the arrangement of allowing the protective assembly 35 to include the second protective part 352 and allowing the second protective part 352 to cover at least one second opening 342a of the second gap 342 can further enhance the protection effect of the protective assembly 35, reduce the possibility of foreign matters entering the second gap 342, and relieve the problem of uneven stress on the battery cells 1 caused by foreign matters, such that the possibility of lithium plating on the battery cells 1 is reduced, the cycle performance of the battery cells 1 is improved, and thereby the service life of the battery can be prolonged.

Further, the second protective part 352 extends along the first direction X and covers the second gaps 342 of a plurality of battery modules 34.

As such, the second protective part 352 has a large structure size. This is favorable to reducing the difficulty in installing the second protective part 352, improves the convenience in arranging the second protective part 352, and can enhance the blocking effect of the second protective part 352 on foreign matters, thereby further relieving the problem of uneven stress on the battery cells 1 caused by foreign matters. Optionally, the second protective part 352 may be a continuous structure extending along the first direction X.

As shown in FIG. 5 to FIG. 13, in some embodiments, the battery cell 1 includes two first surfaces 11 opposite to each other along the first direction X and two second surfaces 12 opposite to each other along the second direction Y. The first surface 11 is located between two second surfaces 12, the second surface 12 has an area smaller than that of the first surface 11, and the first surfaces 11 of two adjacent battery modules 34 are provided opposite to each other.

In the present application, the first surface 11 may be regarded as the large surface of the battery cell 1, and the second surface 12 may be regarded as the side surface of the battery cell 1. Compared with the side surface, the large surface has a larger force-bearing area, and therefore the risk of uneven stress is larger. Therefore, as the first protective part 351 is provided between two adjacent battery modules 34, the first protective part 351 can effectively block the foreign matters that get into the space between two first surfaces 11 of two adjacent battery cells 1, such that the influence of foreign matters on the battery cells 1 is reduced as much as possible, the problem of uneven stress on the first surfaces 11 of the battery cells 1 caused by foreign matters is relieved, and the possibility of lithium plating on the battery cells 1 is reduced.

As a specific embodiment of the present application, as shown in FIG. 5 to FIG 11, the battery includes a case, a battery assembly 3b, and a protective assembly 35. The case includes a first case part having an accommodating cavity and a second case part lidded onto the first case part, and the first case part and the second case part are sequentially provided along the height direction Z. The battery assembly 3b is provided in the accommodating cavity, and the battery assembly 3b includes a plurality of battery cells 1. A gap is present between two adjacent battery cells 1, and the gap extends along the height direction Z of the battery cells 1 and the gap includes two openings opposite to each other along the height direction Z. The protective assembly 35 is connected to two adjacent battery cells 1 and covers the opening of the gap away from the second case part.

The battery provided according to the embodiments of the present application includes the protective assembly 35, and the protective assembly 35 is connected to two adjacent battery cells 1 and covers the opening of the gap away from the second case part, such that the protective assembly 35 can block external foreign matters to some extent, and the problem of uneven stress on the battery cells 1 caused by foreign matters is relieved, and thus the possibility of lithium plating on the battery cells 1 is reduced, the cycle performance of the battery cells 1 is improved, and thereby the service life of the battery can be prolonged.

Besides, when the battery assembly 3b is connected to the first case part by bonding, the protective assembly 35 can also block the structural adhesive. This reduces the possibility of the structural adhesive entering the gap, such that the problem of uneven stress on the battery cells 1 caused by foreign matters is relieved, and thereby the possibility of lithium plating on battery cells 1 is reduced. In addition, when the first case part is installed in an upwardly-opening manner with the battery assembly 3b, the risk that the foreign matters such as welding slags or metal particles in the first case part fall into the gap can also be effectively reduced.

Although the present application has been described with reference to preferred embodiments, various modifications can be made and components can be replaced with equivalents without departing from the scope of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A battery, comprising:
a case;
a battery assembly provided inside the case, the battery assembly comprising a plurality of battery cells, a gap being present between two adjacent battery cells, and the gap extending along a height direction of the battery cells and comprising two openings opposite to each other along the height direction; and
a protective assembly connected to two adjacent battery cells and covering at least one opening of the gap.

2. The battery according to claim **1,** wherein
the case comprises a first case part having an accommodating cavity and a second case part lidded onto the first case part, the first case part and the second case part are sequentially provided along the height direction, and the accommodating cavity is provided inside with the battery assembly, wherein
the protective assembly covers the opening of the gap away from the second case part.

3. The battery according to claim 1 or 2, wherein the protective assembly covers the two openings.

4. The battery according to any one of claims 1 to 3, wherein
the battery assembly comprises a plurality of battery modules sequentially provided along a first direction, and each of the battery modules comprises a plurality of battery cells sequentially provided along a second direction;
the gap comprises a first gap located between two adjacent battery modules, and the first gap comprises two first openings opposite to each other along the height direction, wherein every two of the second direction, the first direction, and the height direction are perpendicular to each other;
the protective assembly comprises first protective parts, and each of the first protective parts connects two adjacent battery modules and covers at least one first opening of the first gap.

5. The battery according to claim 4, wherein
the gap further comprises a second gap located between two adjacent battery cells of the battery module, and the second gap comprises two second openings opposite to each other along the height direction;
the protective assembly further comprises second protective parts, and each of the second protective parts connects two adjacent battery cells of the battery module and covers at least one second opening of the second gap.

6. The battery according to claim 5, wherein the second protective part extends along the first direction and covers the second gaps of the plurality of battery modules.

7. The battery according to any one of claims 4 to 6, wherein each of the battery cells comprises a bottom surface on one side along the height direction, and the first protective part is provided on the one side of the battery cell along the height direction and is connected to at least a part of the bottom surface.

8. The battery according to any one of claims 4 to 7, wherein at least a part of the first protective part is located within the first gap.

9. The battery according to claim 8, wherein the battery cell comprises a bottom surface on one side along the height direction, and along the height direction, a surface of the first protective part is flush with the bottom surface.

10. The battery according to claim 8 or 9, wherein the battery cell comprises a bottom surface on one side along the height direction, and the first protective part comprises:
a first part located within the first gap and connecting two adjacent battery modules; and
a second part located on the one side of the battery cell along the height direction and connected to at least a part of the bottom surface.

11. The battery according to any one of claims 4 to 10, wherein the battery cell comprises:
two first surfaces opposed to each other along the first direction; and
two second surfaces opposed to each other along the second direction, each of the second surfaces being located between the two first surfaces and having an area smaller than that of each of the first surfaces, wherein
the first surfaces of two adjacent battery modules are provided opposite to each other.

12. An electric device, comprising the battery according to any one of claims 1 to 11, the battery being used for providing electric energy.
